# EUROPÄISCHE PATENTSCHRIFT

(11) **EP 1 602 520 B1**
(45) Veröffentlichungstag und Bekanntmachung des Hinweises auf die Patenterteilung: **03.09.2008**
(21) Anmeldenummer: 05012003.9
(22) Anmeldetag: 03.06.2005
(51) Int. Cl.: B60K 26/02, G05G 1/14

(54) **Pedalbaugruppe für Kraftfahrzeuge**
Pedal assembly for motor vehicles
Ensemble d'une pédale pour automobiles

(30) Priorität: 05.06.2004 DE 102004027610
(43) Veröffentlichungstag der Anmeldung: 07.12.2005
(73) Patentinhaber: AB Elektronik GmbH, 59368 Werne (DE)
(72) Erfinder: Leone, Carmelo, 85375 Neufahrn (DE)
(74) Vertreter: Wenzel & Kalkoff

(56) Entgegenhaltungen:
- EP-A- 1 327 927
- EP-A- 1 346 868
- EP-A- 1 369 763
- EP-A- 1 375 233
- WO-A-00/56566
- WO-A-03/039899
- DE-A1- 10 238 483
- DE-A1- 10 251 035
- PATENT ABSTRACTS OF JAPAN Bd. 017, Nr. 686 (M-1529), 15. Dezember 1993 (1993-12-15) -& JP 05 231194 A (NIPPONDENSO CO LTD), 7. September 1993 (1993-09-07)

## Beschreibung

Die Erfindung betrifft eine Pedaleinheit, eine Pedalbaugruppe und ein Kraftfahrzeug.

Pedaleinheiten für Kfz mit integrierten Antriebseinrichtungen, sog. Force-Feedback Pedale, sind u. a. aus der EP-A-1 346 868 und EP-A-1 369 763 der Anmelderin bekannt.

In der EP-A-1 346 868 ist eine Pedaleinheit beschrieben, bei der ein Pedalelement gegenüber einem Grundelement entlang eines Betätigungswegs beweglich ist. Zwei Rückstellelemente sind zur Rückstellung des Pedalelements in eine Ausgangsstellung vorgesehen. Im Pedaldrehpunkt ist als Antriebseinrichtung ein Torque-Motor vorgesehen, dessen Stator am Basiselement befestigt ist, und dessen Rotor mit dem Pedalelement gekoppelt ist. Der Torque-Motor ist mit einer Pedalsteuereinheit in Form einer Mikrorechnereinheit verbunden, die über ein Steuersensorelement, bspw. einen Geschwindigkeitssensor, Abstandssensor oder Temperatursensor verfügt. Abhängig von dem durch den Sensor ermittelten Meßwert und einem in einem Speicher abgespeicherten Normalzustand veranlaßt die Pedalsteuereinheit die Einschaltung des Torque-Motors, um durch das Ansteigen der der Pedalauslenkung entgegenwirkenden Kraft den Fahrzeugführer auf die Überschreitung des Normalzustandes aufmerksam zu machen.

In der EP-A-1 369 763 ist eine Pedaleinheit für ein Kfz beschrieben, die ebenfalls über einen als Antriebseinrichtung dienenden Torque-Motor verfügt. Ein Pedalelement, das gegenüber einem Grundelement beweglich ist, weist ein Gashebelelement auf, das bei Auslenkung des Pedalelements entlang eines Betätigungsweges eine Drehung eines Drehelements bewirkt. Eine Pedalsensoreinheit erzeugt aus der Stellung des Drehelements ein entsprechendes Signal für eine weitere Verarbeitung in einer Drosselklappeneinheit eines Fahrzeugmotors. Federelemente wirken mittels Pedalseilen auf das Drehelement, so daß das Pedalelement bei fehlender Betätigungskraft stets in die Ausgangsstellung zurückgestellt wird. Der Torque-Motor ist im Abstand von dem Drehelement angeordnet und mit diesem über ein Motorseil verbunden, so daß durch Ansteuerung des Motors die der Betätigung entgegenwirkende Kraft eingestellt werden kann.

Damit bei einer Fehlfunktion und ggf. Stillstand des Motors ein Notbetrieb möglich ist, ist zwischen dem Motor und dem Pedalelement eine Kupplungseinrichtung angeordnet, bspw. als Rastkupplung, Stiftkupplung, Motorkupplung, Lamellenkupplung oder Lösekupplung. Die Kupplungseinheit besteht aus zwei Körpern, die im Normalbetrieb so zusammengehalten werden, daß sie sich wie ein Körper verhalten. Bei einer Blockierung der Motoreinheit läßt sich dieser Zusammenhang durch eine starke Betätigung des Pedalelements aufheben. Hierbei wird je nach Ausführung eine Verzahnung gelöst, ein Stift an einer Sollbruchstelle abgebrochen oder ein Seil gedehnt. Es ist dann ein Notbetrieb möglich, d. h. das Kfz kann zur Reparatur der Einheit in eine Werkstatt gefahren werden.

Die WO-A-03/039899 zeigt eine Anzahl verschiedener Ausführungsformen von Pedaleinheiten mit zusätzlicher Rückstellkraft. Durch einen elektromechanischen Aktuator wird bei der Abweichung der Ist-Geschwindigkeit eines Fahrzeugs von einer Soll-Geschwindigkeit eine zusätzliche Stellkraft in einem Pedalelement bereitgestellt. Die Vorrichtungen sollen so ausgebildet sein, daß unter keinen Umständen der Aktuator selbständig die Geschwindigkeit des Fahrzeugs erhöhen kann. Weiter soll gewährleistet sein, daß der Fahrzeugführer stets die volle Kontrolle über das Fahrzeug behält und dementsprechend das Fahrpedal auch entgegen der zusätzlichen Stellkraft betätigen, diese also "übertreten" kann.

In einer Ausführungsform (Fig. 25a, 25b) ist ein Pedalelement und als Grundelement ein Pedalgehäuse vorgesehen. Das Pedalelement ist gegenüber dem Grundelement schwenkbar. Eine Drehscheibe ist über einen Hebel mit dem Pedalelement so gekoppelt, daß sie sich bei Bewegung des Pedalelements dreht. Als steuerbare Antriebseinrichtung ist ein Elektromotor mit einem Rotor und einem Stator im Pedalgehäuse vorgesehen. Die Kraft des Stators wird über eine Getriebeeinrichtung mit Zahnrädern bzw. einem Zahnriemen auf die Drehscheibe übertragen. Die Getriebeeinrichtung umfaßt eine Kopplungseinheit mit Anschlägen, wobei bei einem Aufeinanderliegen der Anschläge Motor und Drehscheibe gekoppelt sind.

Die DE-A-102 38 483 zeigt ein eine Pedaleinheit mit einem Pedalelement, das über einen Hebel so mit einem Drehelement gekoppelt ist, daß sich das Drehelement bei Bewegung des Pedalelements dreht. Eine erste Rückstellfeder greift am Drehelement an, so daß das Pedalelement mit einer Rückstellkraft zurückgestellt wird. Eine zweite Rückstellfeder greift an einem Antriebszylinder an. Der Antriebszylinder weist einen Anschlag auf, der ab einer bestimmten Auslenkung mit dem Drehelement in Eingriff tritt, so daß die zweite Rückstellfeder für eine zusätzliche Rückstellkraft sorgt. Ein Motor treibt über eine Zahnstange einen Verstellzylinder an, der den Antriebszylinder verstellt und so die Auslenkung vorgibt, ab der die zusätzliche Rückstellkraft wirksam wird.

In der WO 00/56566 ist ein Geschwindigkeitseinstellsystem beschrieben. Eine Steuerungseinheit ist über Bowdenzüge einerseits mit dem Gaspedal und andererseits mit der Drosselklappe eines Kfz verbunden. Die Steuereinheit umfasst drei nebeneinander angeordnete, um eine gemeinsame Achse drehbare Arme, von denen der erste Arm mit dem Gaspedalzug und der zweite Arm über einen Gaszug mit der Drosselklappe gekoppelt ist. Der dritte Arm ist mit dem Rotor eines Motors verbunden. Erster und zweiter Arm sind gegen der Betätigungsrichtung des Pedals federbelastet. Zwischen dem ersten und zweiten sowie dem dritten und zweiten Arm sind Anschläge bildende Vorsprünge ausgebildet, mit denen die Rückstellkraft des zweiten Armes auf den ersten Arm und die Motorkraft des Motors in Betätigungsrichtung des zweiten Armes wirken kann. Zusätzlich ist ein Sensor für die Stellung des ersten Armes vorgesehen.

Im Betrieb eines Kfz ist die Steuereinheit in einem Normalbetrieb, in dem die vorgeschriebene Höchstgeschwindigkeit nicht überschritten wird, aktiv. Der Sensor erfasst die Stellung des ersten Armes. Der Motor führt den zweiten und dritten Arm entsprechend nach, um eine gewünschte Betätigung der Drosselklappe zu erzielen. Hierbei wird stets ein Abstand zwischen erstem und zweitem Arm beibehalten, so dass diese nicht in Kontakt treten. Wird nun die Höchstgeschwindigkeit überschritten, so wird der Motor deaktiviert. Erster und zweiter Arm treten nun über den Anschlag in Kontakt. Der Betätigungsbewegung wirken dann die Rückstellkräfte der auf den ersten und zweiten Arm wirkenden Federn gemeinsam entgegen, so dass ein erhöhter Widerstand spürbar wird.

In der EP 1375 233 A1 ist ein Gaspedal mit integrierter Rückstellkraftkontrolle beschrieben. Ein Gaspedalarm ist zur Betätigung drehbar. Daran angeordnet sind ein Sensor zur Lageerfassung, eine Hysteresevorrichtung, eine Rückstellfeder und ein durch eine elektronische Einheit gesteuerter Einstellmotor. Ein Ende der Rückstellfeder bewegt sich zusammen mit dem Pedalarm. Das andere Ende ist an die Ausgangsbewegung des Einstellmotors gekoppelt. Als Motor ist ein Getriebemotor mit Schnecke dargestellt, der ein besonders hohes Untersetzungsverhältnis und eine geringe Ausgangsbewegungsgeschwindigkeit aufweist.

In der JP 05231 194 ist eine Steuereinheit für die Reaktionskraft eines Fahrpedals beschrieben. Ein Fahrpedal weist eine Rückstellfeder auf, die an einem Vorsprung eines Rückstellfeder-Stopperelements anliegt. Ein Schrittmotor verdreht das Stopperelement entsprechend einem Steuersignal, so dass die Rückstellkraft des Pedals verändert werden kann.

In der WO-A-03/039899 sind verschiedene Ausführungsformen von Pedaleinheiten gezeigt, bei denen die Kraft eines Motors verwendet wird, um eine zusätzliche Rückstellkraft an einem Pedalelement aufzubringen. In einer Ausführung (Fig. 25a-d) ist im Wirkpfad zwischen dem Motor und dem Pedal eine Kupplungseinheit angeordnet, die Anschläge umfaßt. Der Rotor des Motors treibt ein erstes Teil der Kupplung und ein zweiter Teil der Kupplung ist über einen Antriebsriemen mit einem Drehelement gekoppelt, das über einen Hebel mit dem Pedalelement so gekoppelt ist, daß es sich bei Betätigung dreht.

Ausgehend von diesen vorbekannten Pedaleinheiten mit Antriebseinrichtung ist es Aufgabe der Erfindung, eine Pedaleinheit, eine Pedalbaugruppe und ein Kraftfahrzeug vorzuschlagen, die besonders kompakt aufgebaut sind.

Diese Aufgabe wird gelöst durch eine Pedaleinheit nach Anspruch 1, eine Pedalbaugruppe nach Anspruch 8 und ein Kraftfahrzeug nach Anspruch 9. Abhängige Ansprüche beziehen sich auf vorteilhafte Ausführungsformen der Erfindung.

Eine Pedaleinheit umfaßt ein Pedalelement, ein Grundelement, ein Drehelement, ein Rückstellelement, einen Sensor und eine steuerbare Antriebseinrichtung mit einem Rotor und einem Statorelement. Das Drehelement ist mit dem Pedalelement so gekoppelt, daß es sich bei Bewegung des Pedalelements dreht. Das Statorelement des Motors ist bevorzugt fest mit dem Grundelement verbunden. Der Rotor des Elektromotors wird gegenüber dem Stator drehend angetrieben. Durch eine Freilauf-Kopplungseinheit sind die Antriebseinrichtung und das Pedalelement so gekoppelt, daß die Antriebseinrichtung zwar die Bewegung des Pedalelements in Betätigungsrichtung beeinflussen und eine Gegenkraft hierzu aufbringen kann. Das Pedalelement kann sich aber unabhängig von der Antriebseinrichtung entgegen der Betätigungsrichtung zurückstellen. Der Sensor ist mit dem Drehelement gekoppelt.

Erfindungsgemäß ist vorgesehen, daß
- der Rotor und das Drehelement um eine gemeinsame Drehachse drehbar nebeneinander angeordnet sind,
- und die Freilauf-Kopplungseinheit zwischen Rotorelement und Drehelement angeordnet ist,
- und der Sensor als Rotationssensor ausgebildet und in der Verlängerung der gemeinsamen Drehachse des Rotors und des Drehelements angeordnet ist.

Auf diese Weise wird eine besonders kompakte Einheit geschaffen. Die Einheit kann mit im Vergleich zum Stand der Technik relativ geringer Teilezahl und daher ausgesprochen kostengünstig aufgebaut werden. Große, teure und anfällige Getriebevorrichtungen zwischen Antriebseinheit und Drehelement entfallen.

Für den Sensorwert kommt es aufgrund seiner Anbringung am Drehlement tatsächlich auf die Stellung des Pedalelements an, und der Sensorwert wird durch eine blockierende oder nur langsam rückstellende Antriebseinheit nicht beeinflußt. Ein Rotationssensor kann alternativ oder zusätzlich auch für die Position des Rotorelements vorgesehen sein. Der Rotationssensor ist in der Verlängerung der gemeinsamen Drehachse des Rotors und des Drehelements angeordnet. Somit ist eine besonders bevorzugte, sehr kompakte Anordnung realisierbar, bei der die für die Funktion maßgeblichen Baugruppen, nämlich Motor mit Stator und Rotor, Drehelement und Sensor unmittelbar nebeneinander auf einer gemeinsamen Achse angeordnet sind.

Die Freilauf-Kopplungseinheit umfaßt bevorzugt einen ersten Anschlag auf dem Rotorelement und einen zweiten Anschlag auf dem Drehelement. Bei Betätigung des Pedalelements, d. h. Aufbringen einer Pedalkraft in Betätigungsrichtung, treten die Anschlagelemente miteinander in Eingriff. In diesem Fall koppelt also die Freilauf-Kopplungseinheit, so daß eine Kraftkopplung zwischen Antriebseinrichtung und Pedalelement vorliegt. Allerdings sind die Anschlagelemente bei einer Bewegung des Pedalelements entgegen der Betätigungsrichtung voneinander lösbar. In dieser Richtung koppelt also die Freilauf-Kopplungseinheit nicht.

Die Freilauf-Kopplungseinheit ist bevorzugt sehr einfach aufgebaut, indem Rotor und Drehelement scheibenförmig ausgebildet sind. Die Anschläge sind als Erhöhungen oder Vertiefungen ausgebildet. Mit dieser einfachen und kompakten Konstruktion wird eine Funktion erzielt, bei der ein sicherer Betrieb möglich ist, da eine blockierende oder nur träge zurückstellende Antriebseinrichtung ohne Einfluß auf die Rückstellung des Pedalelements ist. Bei der Verwendung des Pedalelements als Gaspedal in einem Kfz ist somit gewährleistet, daß nicht gegen den Willen des Fahrzeugführers das Gaspedal durch die Antriebsvorrichtung niedergedrückt bzw. niedergehalten wird.

Gemäß einer Weiterbildung der Erfindung ist ein Federelement vorgesehen, wobei durch die hierdurch erzeugte Federkraft die Anschlagelemente zusammengedrückt werden. Durch das Federelement wird die Freilauf-Kopplungseinheit so beaufschlagt, daß die Anschläge aufeinandergehalten werden. Hierbei kann auf einen separaten Positionssensor für die Ermittlung der Position der Antriebseinrichtung verzichtet werden, da diese im normalen Betrieb stets der Position des Pedalelements folgt.

Gemäß einer Weiterbildung der Erfindung ist vorgesehen, daß das Rückstellelement - bzw. im Fall von mehreren Rückstellelementen mindestens ein Rückstellelement - mit dem Drehelement, also dem pedalseitigen Teil der Freilauf-Kopplungseinheit gekoppelt ist. Das Rückstellelement kann somit auch bei Stillstand der Antriebseinrichtung eine Rückstellung bewirken, wobei sich dann die Anschlagelemente voneinander lösen. Auch im normalen, störungsfreien Betrieb hat dies den Vorteil, daß die Rückstellung des Pedals spontan erfolgen kann und frei ist von einer durch den Motor verursachten Trägheit.

Als Motor wird bevorzugt ein Torque-Motor eingesetzt, der am Stator über eine Anzahl Feldspulen und am Rotor über mindestens ein Permanentmagnetelement verfügt. Der Motor kann direkt, ohne ein Getriebe eingesetzt werden. Durch Verwendung eines scheibenförmigen Rotors mit Permanentmagnetelementen kann eine sehr kompakte Bauweise erreicht werden.

Gemäß einer bevorzugten Ausführungsform weist das Grundelement ein Pedalgehäuse auf, und eine Antriebssteuereinheit zur Steuerung der Antriebseinrichtung ist im Pedalgehäuse untergebracht. Die Antriebssteuereinheit stellt bei einem elektrischen Motor bevorzugt die notwendige elektrische Leistung zur Verfügung. Zum Anschluß an die Bordelektronik eines Kfz ist ein Steckanschluß vorgesehen. Für eine besonders einfache und haltbare Kopplung der Antriebssteuereinheit und ggf. auch der Sensoreinheit mit dem Steckanschluß ist eine elektrische Leitung in Form eines Stanzgitters mit mehreren Leitern vorgesehen, das mindestens zum Teil in die - bspw. aus Kunststoff bestehende - Wandung des Pedalgehäuses eingeformt ist.

Weiter betrifft die Erfindung eine Pedalbaugruppe mit einer vorbeschriebenen Pedaleinheit und einer Pedalsteuereinheit. Die Pedalsteuereinheit muß nicht als separate Baugruppe vorgesehen sein, sonder kann Teil der Kfz-Elektronik sein. Bspw. kann es sich um einen Mikrokontroller handeln, dem neben der Pedalsteuerung weitere Steuerungsaufgaben innerhalb des Kfz zugewiesen sind. Die Pedalsteuereinheit gibt die von der Antriebseinrichtung zu erzeugende Gegenkraft vor. Die Vorgabe erfolgt hierbei anhand von Signalen oder Meßwerten, die der Pedalsteuereinheit zugeführt werden, wobei die Signale oder Meßwerte Situationen bezeichnen, auf die der Fahrzeugführer mittels der erhöhten Gegenkraft hingewiesen werden soll, bspw. eine Geschwindigkeitsüberschreitung.

Nachfolgend werden Ausführungsformen der Erfindung anhand von Zeichnungen näher beschrieben. In den Zeichnungen zeigen:
- Fig. 1: eine perspektivische Ansicht einer ersten Ausführungsform einer Pedaleinheit mit teilweise entferntem Gehäuse;
- Fig. 2: eine schematische Ansicht eines Pedalelements und eines Drehelements;
- Fig. 3: eine Querschnittsansicht durch einen Teil der Pedaleinheit aus Fig. 1;
- Fig. 4: eine stirnseitige Ansicht eines Teils der Pedaleinheit aus Fig. 1;
- Fig. 5: in einer perspektivischen Explosionsdarstellung Elemente des Teils aus Fig. 4;
- Fig. 6: eine Seitenansicht eines Rotorelements;
- Fig. 7: eine Seitenansicht eines Drehelements;
- Fig. 8a, 8b: Seitenansichten einer Freilauf-Kopplungseinheit in verschiedenen Positionen;
- Fig. 9: eine schematische Seitenansicht von Elementen der Pedaleinheit aus Fig. i.

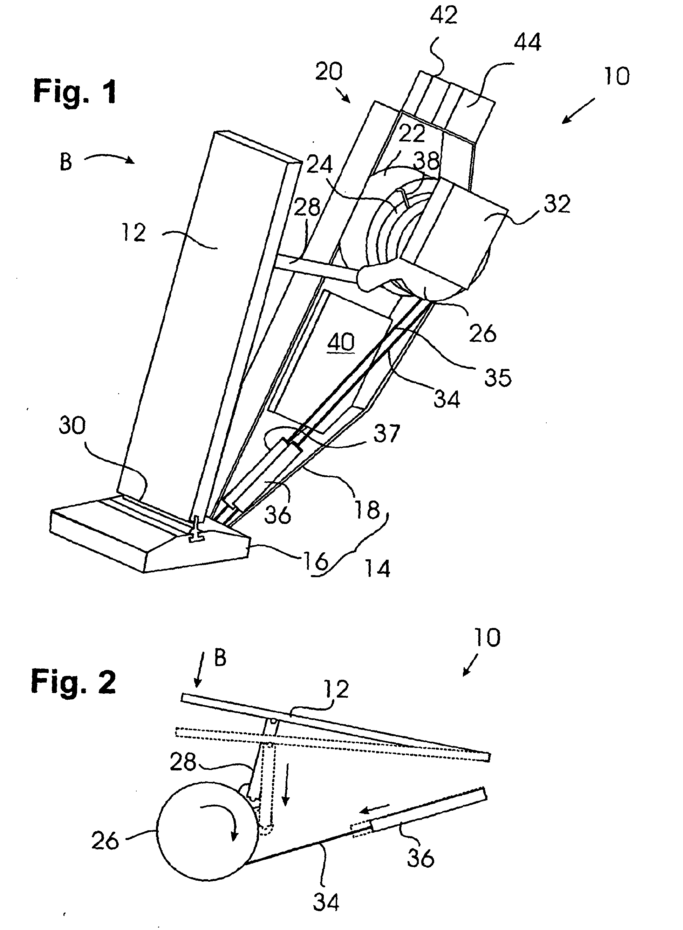

In Fig. 1 ist eine erste Ausführungsform einer Pedaleinheit 10 mit einem Pedalelement 12 und einem Grundelement 14 bestehend aus einer Bodenplatte 16 und einem Grundelementgehäuse 18 dargestellt. Das Grundelementgehäuse 18 ist teilweise geöffnet dargestellt.

Bei der Pedaleinheit 10 handelt es sich um ein Gaspedal eines Kfz. Hierbei ist das Grundelement 14 fest im Kfz angeordnet. Die Pedaleinheit 10 ist als stehendes Pedal ausgeführt.

Innerhalb des Grundelementgehäuses 18 befinden sich ein Torque-Motor 20 mit einem Stator 22 und einem Rotor 24. Der Rotor 24 ist scheibenförmig ausgebildet. Neben dem Rotor 24 ist eine Drehscheibe 26 angeordnet, die mittels eines Hebelelements 28 mit dem Pedalelement 12 gekoppelt ist.

Das Pedalelement 12 ist an der Grundplatte 16 mittels eines Filmscharniers 30 angelenkt, so daß es gegenüber dem Grundelement 14 schwenkbar ist. Bei Betätigung des Pedalelements 12 in Betätigungsrichtung B wird über das Hebelelement 28 die Drehscheibe 26 im Grundgehäuse 18 gedreht. Die Drehposition der Scheibe 26 wird mittels der im Grundgehäuse 18 feststehenden Sensoreinheit 32 ermittelt.

Bei der Sensoreinheit 16, die hier nur jeweils symbolisch dargestellt ist, kann es sich bspw. um einen Magnetsensor (bspw. nach dem Hall-Prinzip, oder als magnetorestriktiver Sensor), um einen Induktivsensor oder um einen potentiometrisch arbeitenden Sensor handeln.

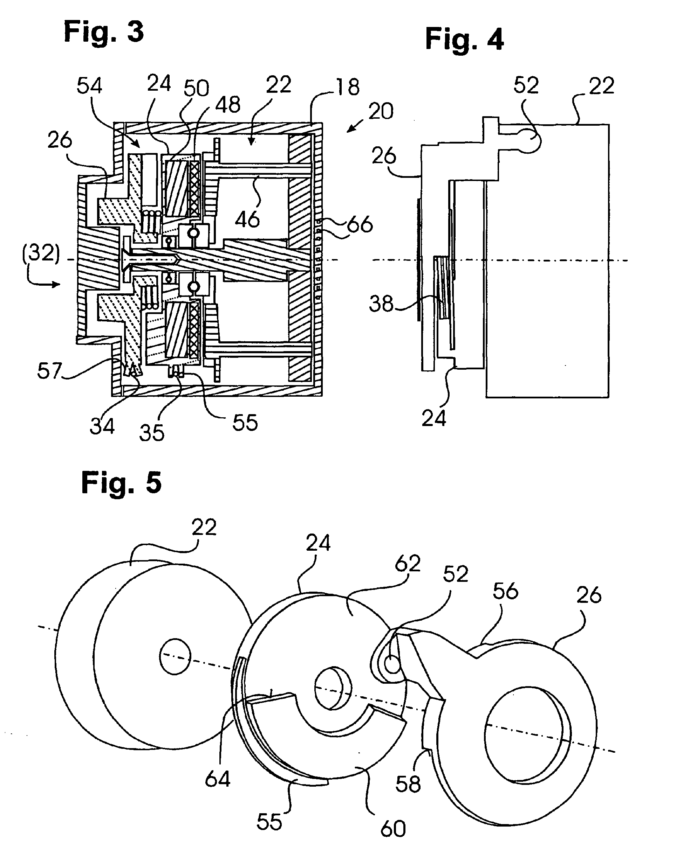

Die Pedaleinheit 10 verfügt über ein erstes Rückstellelement 34 in Form eines ersten Seils mit einer Feder 36 und über ein zweites, gleichartiges Rückholelement 35 mit einer Feder 37. Das Seil 35 wirkt auf das Rotorelement 24 des Motors 20. Es ist dort - wie in Fig. 3 sichtbar - bei Drehung des Rotorelements 24 in einem als Rille ausgebildeten Führelement 55 geführt. Das erste Rückholelement 34 wirkt auf die Drehscheibe 26 und ist dort - wie wiederum in Fig. 3 sichtbar - in einer Nut 57 geführt. Als weiteres Federelement ist eine Schenkelfeder 38 vorgesehen, die zwischen dem Rotorelement 24 und der Drehscheibe 26 angeordnet ist und von der in Fig. 1 nur ein Federbein sichtbar ist.

Für die elektrische Ansteuerung des Motors 20 enthält das Grungehäuse 18 eine Leistungselektronik-Einheit 40 in Form einer Leiterplatte mit einer darauf angebrachten Leistungstreiberschaltung. Am stirnseitigen Ende des Grundgehäuses 18 befinden sich zwei Anschlußstecker 42, 44. Die Steckergehäuse sind gemeinsam mit dem Grundgehäuse 18 als ein Spritzguß-Teil geformt, wobei die in den Steckergehäusen zur elektrischen Kontaktierung freistehenden Kontaktlaschen (nicht dargestellt) Teil eines Stanzgitters sind, das in die Wandung des Grundgehäuses 18 eingeformt ist.

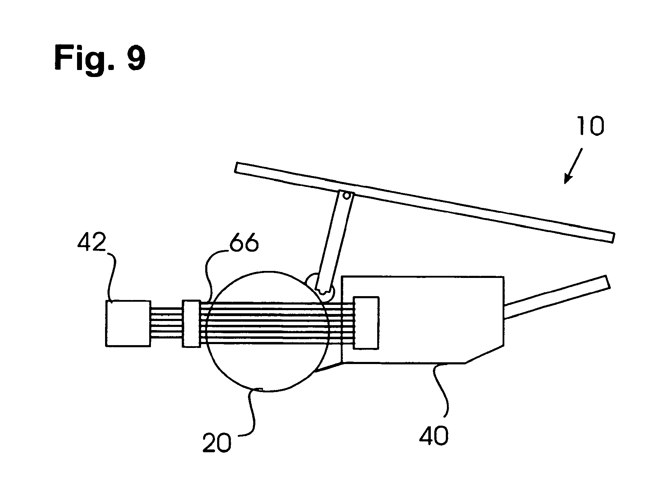

In Fig. 9 sind in einer symbolischen Darstellung die Elemente der Pedaleinheit 10 in einer Seitenansicht dargestellt. Es ist zu erkennen, daß die elektrische Zuleitung zum Steckeranschluß 42, und die Verbindung des Steckeranschlusses 42 mit dem Motor 20 und der Leistungselektronik 40 mittels eines Stanzgitters 66 gebildet ist. Das Stanzgitter 66 umfaßt mehrere voneinander isolierte Leiterelemente. Das Stanzgitter 66 ist in die Wandung des Grundelementgehäuses 18 eingeformt, wie im Schnitt in Fig. 3 erkennbar.

In Fig. 2 ist in einer symbolischen Darstellung noch einmal die Funktion der Pedaleinheit 10 gezeigt. Bei Betätigung des Pedalelements 12 in Betätigungsrichtung B dreht das gelenkig angebrachte Hebelelement 28 die Drehscheibe 26 und den hiermit gekoppelten Rotor 24. Das Rückstellelement 34 wirkt dem entgegen, wobei durch die Feder 36 eine definierte Rückstellkraft aufgebracht wird.

Im folgenden soll nun Aufbau und Funktion der im Grundgehäuse 18 angeordneten Funktionseinheiten im Hinblick auf die Figuren 3-7, 8a, 8b erläutert werden:

Fig. 3 zeigt einen Querschnitt durch das Grundgehäuse 18 in Höhe des Motors 20. Der Stator 22 des Motors 20 umfaßt vier auf dem Umfang sektorförmig angeordnete Feldspulen mit Kernelementen 46. Mittels der in jedem Quadranten angeordneten Feldspulen kann eine gewünschte Feldstärke und -polarität in dem jeweiligen Quadranten der dem Rotor 24 zugewandten Seitenfläche erzeugt werden.

Der gegenüber dem Stator 22 drehbar gelagerte Rotor enthält ein Ringelement 48. Das Ringelement 48 ist ein Permanentmagnet. Hierbei ist die Ringscheibe entsprechend der Anordnung der Feldspulen 46 in vier Sektoren geteilt, wobei jeweils angrenzende Sektoren gegensinnig magnetisiert sind. Hinter dem Ringelement 48 ist ein ringförmiger Weicheisenkern 50 vorgesehen.

Der Motor 20 arbeitet als Torque-Motor, wobei über die Bestromung der Feldspulen 46 Feldstärke und -polarität so eingestellt werden, daß eine bestimmte Winkelstellung des Rotors 24 bzw. ein bestimmtes Drehmoment eingestellt wird. Die Besonderheit des Torque-Motors liegt darin, daß relativ hohe Drehmomente direkt erzeugt werden können. Allerdings ist der Drehbereich des Rotors im gezeigten Beispiel eines Motors mit vier Polen auf weniger als 90° beschränkt. In alternativen Ausgestaltungen kann der Motor 20 über eine abweichende Polzahl verfügen, so daß sich auch eine abweichende Obergrenze des Drehbereichs ergibt (bspw. 180° bei 2 Polen, 120° bei 3 Polen etc.).

Der Drehsensor 32 aus Fig. 1 ist in Fig. 3 nicht im Detail dargestellt. Bevorzugt handelt es sich um einen Halleffekt-Drehsensor oder einen induktiven Drehsensor. Diese sind jeweils aus einem Statorteil (das mit dem Grundelementgehäuse 18 feststeht) und einem Rotorteil, (das sich mit der Drehscheibe 26 dreht) aufgebaut. Die relative Stellung von Stator und Rotor wird erfaßt und als elektrisches Signal weitergegeben. Der Sensor 32 kann an der gekennzeichneten Stelle (32) entweder innerhalb oder außerhalb des Gehäuses angeordnet sein. Der Sensor 32 befindet sich dann in der Verlängerung der gemeinsamen Drehachse von Motor 20 und Kupplung 54.

Wie aus Fig. 3 und Fig. 4 ersichtlich ist die Drehscheibe 26 neben dem Rotor 24 und mit diesem um eine gemeinsame Achse drehbar angeordnet. Die Drehscheibe 26 weist einen vorstehenden Zapfen 52 auf, an dem das Hebelelement 28 des Pedalelements 12 angreift.

Der Motor 20 soll der bei Betätigung des Pedalelements 12 erfolgenden Drehbewegung der Drehscheibe 26 eine gesteuerte Gegenkraft entgegensetzen. Hierzu ist sein Rotor 24 über eine Freilauf-Kopplungseinheit 54 mit der Drehscheibe 26 gekoppelt, die zwischen Rotor 24 und Drehscheibe 26 gebildet ist.

Wie bereits im Zusammenhang mit Fig. 1 erwähnt, verfügt die Pedaleinheit 10 über zwei separate Rückstellelemente 34, 35, die Rotor 24 und Drehscheibe 26 jeweils unabhängig voneinander zurückstellen.

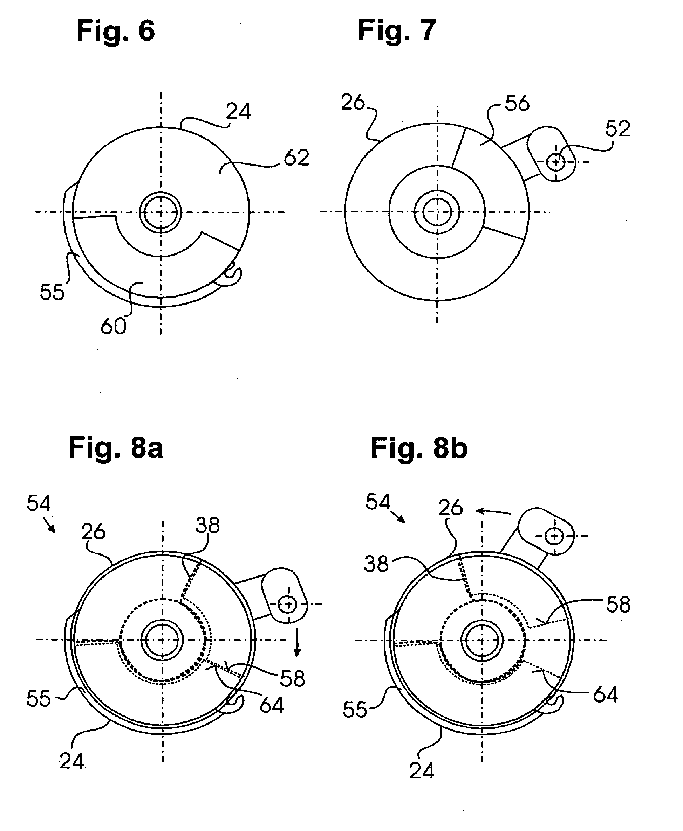

Wie aus den Figuren 6 und 7, sowie aus der Explosionsdarstellung in Fig. 5 hervorgeht, weist die Drehscheibe 26 eine sektorförmige, im gezeigten Beispiel ca. 90° breite Erhöhung 56 auf, die gegenüber dem übrigen Kreisring in axialer Richtung vorspringt. Hierdurch wird eine in Umfangsrichtung wirkende Anschlagfläche 58 gebildet.

Andererseits weist der Rotor 24 einen axial vorspringenden Bereich 60 von im gezeigten Beispiel ca. 150° Breite, und entsprechend einen axial zurückspringenden Bereich 62 von ca. 210° Breite auf. An einem Ende des vorspringenden Bereichs 60 ist so eine in Umfangsrichtung wirkende Anschlagfläche 64 gebildet.

Zur Bildung der Freilauf-Kopplungseinheit 54 sind Drehscheibe 26 und Rotor 24 nun so aufeinander angeordnet, daß die jeweils vorspringenden Bereiche 56, 60 jedes Elements in die jeweils axial zurückliegenden Bereiche des gegenüberliegenden Elements eingreifen. Somit liegen sich in entsprechender Drehposition die Anschlagflächen 58, 64 gegenüber. Die Drehscheibe 26 kann gegenüber dem Rotor 24 in einem Winkelbereich von maximal 120° gedreht werden.

Die entsprechend zusammengesetzte Freilauf-Kopplungseinheit 54 ist in einer Seitenansicht in den Fig. 8a und 8b in verschiedenen Stellungen gezeigt. Wird bei einer Betätigung des Pedalelements 12 in Betätigungsrichtung B die Drehscheibe 26 gedreht (in Fig. 8a im Uhrzeigersinn), so kommen die Anschlagflächen 58, 64 in Eingriff. Eine Kraft bzw. Bewegung des Pedalelements 12 ist somit in dieser Bewegungsrichtung mit dem Rotor 24 gekoppelt. Somit ist es durch entsprechende Bestromung der Feldspulen 46 des Motors 20 möglich, gezielt Gegenkräfte gegenüber der Betätigungsbewegung zu erzeugen, die dann über die Freilauf-Kopplungseinheit 54 in das Pedalelement 12 überkoppelt werden.

Hingegen zeigt Fig. 8b die Freilauf-Kopplungseinheit 54 bei einer Rückstellbewegung des Pedalelements 12. Hierbei dreht sich die Drehscheibe 26 entgegen dem Uhrzeigersinn. Wie in Fig. 8b ersichtlich erfolgt die Rückstellbewegung der Drehscheibe 26 unabhängig vom Rotor 24, d. h. daß bei einer Blockierung oder einer nur langsamen Rückstellbewegung des Rotors 24 trotzdem durch das Rückstellelement 34 eine schnelle Rückstellung des Pedalelements 12 entgegen dem Uhrzeigersinn erfolgt. In dieser Richtung koppelt die Freilauf-Kopplungseinheit 54 nicht.

Die Schenkelfeder 38 drückt zwar die Anschlagflächen 58, 64 aufeinander, so daß die Freilauf-Kopplungseinheit 54 im normalen Betrieb zusammengehalten wird. Die Feder 38 ist aber so ausgelegt, daß ihre Federkraft im Vergleich zu den Rückholelementent 34, 35 verhältnismäßig gering ist. Das von der Feder 38 erzeugte Drehmoment ist deutlich geringer als das Rückstellmoment durch das Seilelement 34. Deshalb ist die Rückstellung der Drehscheibe 26 auch bei Stillstand des Rotors 24 gewährleistet.

Im Folgenden soll die Funktion der Pedaleinheit 10 noch einmal im Zusammenhang erläutert werden:

Die Pedaleinheit 10 dient innerhalb eines Kfz als Gaspedaleinheit. Der Fahrzeugführer betätigt das Pedalelement 12 in Betätigungsrichtung, wodurch sich das Drehelement 26 dreht. Die Position des Drehelements 26 wird durch den Sensor 32 erfaßt und über den Steckkontakt 44 an die Motorsteuerung des Kfz übermittelt. Von dort wird eine entsprechende Position der Drosselklappe vorgegeben.

Der Betätigungsbewegung wirkt - bei zunächst stromlos angenommenem Motor 20 - die Kraft der Rückholelemente 34, 35 entgegen, wobei das Rückholelement 35 auf den Rotor 24 und das Rückholelement 34 auf die Drehscheibe 26 wirkt. Bei nachlassender Betätigungskraft stellt sich das Pedalelement so zurück. Dabei wird der Rotor 24 ebenfalls zurückgestellt, so daß die Anschläge 58, 64 in Eingriff bleiben. Die Feder 38 bewirkt zusätzlich, daß im normalen Betrieb die Anschläge 58, 64 aufeinander gedrückt werden. Somit kann auf einen separaten Sensor, der die Position des Rotors 24 ermittelt verzichtet werden.

Die Tatsache, daß das Rückstellelement 34 direkt auf die Drehscheibe 26, also den pedalseitigen Teil der Freilauf-Kopplungseinheit 54 wirkt, sorgt für eine spontane Rückstellung, die von einer eventuellen Trägheit des Motors 20, der über eine erhöhte Masse verfügt, frei ist. Die Rückstellung wird auch durch den Sensor 32 sofort detektiert und weitergemeldet.

Von einer Pedalsteuereinheit innerhalb des Kfz wird nun über den Steckkontakt 42 ein Ansteuersignal zur Erzeugung einer Gegenkraft übermittelt. Mit der Gegenkraft, die konstant, aber auch zeitlich variabel sein kann, soll eine Signalisierung an den Fahrzeugführer erfolgen, so daß er durch die Gegenkraft auf eine bspw. gefährliche Fahrsituation (bspw. zu geringer Abstand oder zu hohe Geschwindigkeit) aufmerksam gemacht wird. Das Ansteuersignal wird in der Leistungselektronikeinheit 40 in eine entsprechende Bestromung der Feldspulen 46 des Stators 22 umgesetzt. Hierdurch wirkt ein entsprechendes Drehmoment auf den Rotor 24, und zwar entgegen der Betätigungsrichtung (d. h. in Fig. 8a, 8b entgegen dem Uhrzeigersinn).

Befindet sich nun das Pedalelement 12 bereits in einer entlang des Betätigungsweges B ausgelenkten Position, oder versucht der Fahrzeugführer das Pedalelement 12 zu betätigen, so spürt er zusätzlich zu der von den Rückstellelementen 34, 35 aufgebrachten Rückstellkraft die vom Motor 20 herrührende Gegenkraft, die über die in dieser Richtung kuppelnde Freilauf-Kopplungseinheit übertragen wird. Der Fahrzeugführer kann durch Erhöhung der Pedalkraft diese Gegenkraft überwinden, wird aber die erhöhte Gegenkraft bemerken und ggf. entsprechend reagieren.

Verringert der Fahrzeugführer die Betätigung des Pedalelements 12, so wird dieses durch die Rückstellelemente 34, 35 und ggf. durch die Kraft des Torque-Motors 20 zurückgestellt.

Ergibt sich hierbei allerdings eine Blockierung des Rotors, bspw. durch eine Fehlansteuerung des Motors 20, so führt diese Blockierung des Rotors 24 nicht zu einer Blockierung der Drehscheibe 26, und damit zu einem Niederhalten des Pedalelements 12. Denn in diesem Fall wirkt das Rückstellelement 34 so auf die Drehscheibe 26, daß sich entgegen der Feder 38, wie in Fig. 8b gezeigt, die Anschlagfläche 58 der Drehscheibe 26 von der Anschlagfläche 64 des Rotors 24 löst, und das Pedalelement 12 auch bei feststehendem Rotor 24 in seine Ausgangsposition zurückgestellt wird.

Zu der oben beschriebenen Ausführungsform sind eine Anzahl von Varianten denkbar. So können insbesondere die Rückstellelemente 34, 35 anders ausgebildet werden. So kann bspw. eines oder beide Rückstellelemente 34, 35 als Schrauben- bzw. Schenkelfedern ausgebildet sein.

Anstatt der in Fig. 1 gezeigten zwei Steckeranschlüsse 42, 44 kann für die Ansteuerung des Motors einerseits und die Übermittlung des Sensorsignals andererseits auch ein gemeinsamer Stecker mit einer entsprechenden Anzahl von Kontakten vorgesehen sein.

## Patentansprüche

1. Pedaleinheit mit
- einem Pedalelement (12), das gegenüber einem Grundelement (14) entlang eines Betätigungsweges beweglich ist, wobei das Pedalelement (12) in einer Betätigungsrichtung (B) auslenkbar ist,
- einem Drehelement (26), das mit dem Pedalelement (12) so gekoppelt ist, daß es sich bei Bewegung des Pedalelements (12) dreht,
- mindestens einem Rückstellelement (34, 35) zur Rückstellung des Pedalelements (12) entgegen der Betätigungsrichtung (B),
- einem Elektromotor (20) mit einem Rotor (24) und einem Statorelement (22) zur Erzeugung einer Gegenkraft gegen die Pedalbewegung
- und einer Freilauf-Kopplungseinheit (54) durch die der Rotor (24) und das Drehelement (26) bei Bewegung des Pedalelements (12) in Betätigungsrichtung (B) gekoppelt sind, so daß die vom Motor (20) erzeugte Gegenkraft auf das Pedalelement wirkt, aber bei Bewegung des Pedalelements (12) entgegen der Betätigungsrichtung getrennt bewegbar sind,
- wobei ein Sensor (32) für die Stellung des Pedalelements (12) vorgesehen ist, der mit dem Drehelement (26) gekoppelt ist,
**dadurch gekennzeichnet, daß**
- der Rotor (24) und das Drehelement (26) um eine gemeinsame Drehachse drehbar nebeneinander angeordnet sind,
- und die Freilauf-Kopplungseinheit (54) zwischen Rotor (24) und Drehelement (26) angeordnet ist,
- und der Sensor als Rotationssensor (26) ausgebildet und in der Verlängerung der gemeinsamen Drehachse des Rotors (24) und des Drehelements (26) angeordnet ist.

2. Pedaleinheit nach Anspruch 1, bei der
- die Freilauf-Kopplungseinheit (54) einen ersten Anschlag (64) auf dem Rotorelement (24) und einen zweiten Anschlag (58) auf dem Drehelement (26) umfaßt,
- wobei bei Betätigung des Pedalelements (12) die Anschlagelemente (58, 64) miteinander in Eingriff treten, und die Anschlagelemente (58, 64) bei Rückstellung des Pedalelements (12) voneinander lösbar sind.

3. Pedaleinheit nach Anspruch 2, bei der
- ein Federelement (38) so zwischen dem Rotorelement (24) und dem Drehelement (26) angeordnet ist, daß die Anschlagelemente (58, 64) gegeneinander gedrückt werden.

4. Pedaleinheit nach einem der vorangehenden Ansprüche bei der
- das Rotorelement (24) und das Drehelement (26) scheibenförmig ausgebildet sind und aufeinander liegen,
- wobei die Anschläge (58,64) als Erhöhungen oder Vertiefungen ausgebildet sind.

5. Pedaleinheit nach einem der vorangehenden Ansprüche, bei der
- mindestens ein Rückstellelement (34) mit dem Drehelement (26) gekoppelt ist.

6. Pedaleinheit nach einem der vorangehenden Ansprüche, bei der
- die Antriebseinrichtung (20) als Torque-Motor ausgebildet ist,
- wobei das Statorelement (22) eine Anzahl von Feldspulen aufweist,
- und das Rotorelement (25) mindestens ein Magnetelement (50) aufweist.

7. Pedaleinheit nach einem der vorangehenden Ansprüche, bei der
- das Grundelement (14) ein Pedalgehäuse (18) aufweist,
- und eine darin angebrachte Antriebssteuereinheit (40) zur Ansteuerung der Antriebseinrichtung (20),
- sowie mindestens einen Steckeranschluß (42,44) für den elektrischen Anschluß der Steuereinheit und/oder einer Sensoreinheit,
- wobei zur elektrischen Verbindung der Antriebssteuereinheit und/oder der Sensoreinheit mit dem Steckanschluß (42,44) ein Stanzgitter (66) mindestens zum Teil in eine Wandung des Pedalgehäuses (18) eingeformt ist.

8. Pedalbaugruppe mit
- einer Pedaleinheit (10) nach einem der vorangehenden Ansprüche,
- und einer Pedalsteuereinheit zur Vorgabe einer von der Antriebseinrichtung (20) zu erzeugenden Gegenkraft.

9. Kraftfahrzeug mit einer Pedaleinheit nach einem der Ansprüche 1-7 oder einer Pedalbaugruppe nach Anspruch 8.

## Claims

1. Pedal assembly comprising:
- a pedal element (12) that may be displaced with respect to a base element (14) along an actuation path, whereby the pedal element (12) may swivel out along an actuation direction (B),
- a rotating element (26) that is so linked to the pedal element (12) so that it rotates upon displacement of the pedal element (12),
- at least one return element (34,35) to return the pedal element (12) against the actuation direction (B),
- an electric motor (20) with a rotor (24) and a stator element (22) to create opposing force against pedal depression, and
- a neutral coupling unit (54) by means of which the rotor (24) and the rotating element (26) are coupled upon actuation of the pedal element (12) along an actuation direction (B) so that the opposing force generated by the motor (20) acts on the pedal element, but that allows separate motion against the actuation direction upon actuation of the pedal element (12)
- whereby for the positioning of the pedal element (12) a sensor (32) is provided that is coupled with the rotating element (26),
**characterized in that**
- the rotor (24) and the rotating element (26) are pivot-mounted adjacent to each other along a common axis,
- and the freewheel clutch unit (54) is positioned between the rotor (24) and the rotating element (26),
- and the sensor is configured as a rotation sensor (26) that is positioned along the extension of the common axis of the rotor (24) and the rotating element (26).

2. Pedal assembly according to claim 1, in which
- the freewheel clutch unit (54) includes a first strike surface (64) on the rotor element (24) and a second strike surface (58) on the rotating element (26).
- whereby the strike-surface elements (58, 64) engage upon actuation of the pedal element (12), and the strike-surface elements (58, 64) are separated from each other upon return of the pedal element (12).

3. Pedal assembly according to claim 2, in which
- a spring element (38) is so positioned between the rotor element (24) and the rotating element (26) that the strike-surface elements (58,64) are pressed together.

4. Pedal assembly according to one of the preceding claims, in which
- the rotor element (24) and the rotating element (26) are disk-shaped and rest one upon the other,
- whereby the strike surfaces (58, 64) are formed as projections or recesses.

5. Pedal assembly according to one of the preceding claims, in which
- at least one return element (34) is coupled with the rotating element (26).

6. Pedal assembly according to one of the preceding claims, in which
- the drive device (20) is in the form of a torque motor,
- whereby the stator element (22) includes a number of field coils, and
- the rotor element (25) includes at least one magnet element (50).

7. Pedal assembly according to one of the preceding claims, in which
- the base element (14) includes a pedal housing (18)
- and a drive control unit (40) mounted within it to control the drive device (20),
- and at least one male plug connector (42, 44) for electrical connection of the control unit and/or a sensor unit,
- whereby a stamped grid (66) for electrical connection of the drive control unit and/or the sensor unit is at least partially embedded into the walls of the pedal housing (18) along with the plug connector (42, 44).

8. Pedal assembly comprising:
- a pedal unit (10) according to one of the preceding claims,
- and a pedal control unit to prescribe an opposing force to be created by the drive device (20).

9. A motor vehicle having a pedal unit according to one of claims 1 - 7 or a pedal assembly according to claim 8.

## Revendications

1. Unité de pédale comprenant
- un élément de pédale (12) qui est mobile par rapport à un élément de base (14) le long d'une course d'actionnement, l'élément de pédale (12) pouvant être dévié dans une direction d'actionnement (B),
- un élément tournant (26) qui est couplé à l'élément de pédale (12) de telle manière qu'il tourne lors d'un mouvement de l'élément de pédale (12),
- au moins un élément de rappel (34, 35) pour le rappel de l'élément de pédale (12) à l'inverse de la direction d'actionnement (B),
- un moteur électrique (20) avec un rotor (24) et un élément de stator (22) pour générer une force antagoniste contre le mouvement de pédale
- et une unité d'accouplement à roue libre (54) par laquelle le rotor (24) et l'élément tournant (26) sont couplés lors d'un mouvement de l'élément de pédale (12) dans la direction d'actionnement (B), de sorte que la force antagoniste générée par le moteur (20) agit sur l'élément de pédale, mais sont mobiles séparément lors d'un mouvement de l'élément de pédale (12) à l'inverse de la direction d'actionnement,
- un capteur (32) qui est couplé à l'élément tournant (26) étant prévu pour la position de l'élément de pédale (12),
**caractérisée en ce que**
- le rotor (24) et l'élément tournant (26) sont disposés l'un à côté de l'autre, pouvant tourner autour d'un axe de rotation commun,
- et l'unité d'accouplement à roue libre (54) est disposée entre le rotor (24) et l'élément tournant (26),
- et le capteur est constitué en tant que capteur de rotation (26) et est disposé dans le prolongement de l'axe de rotation commun du rotor (24) et de l'élément tournant (26).

2. Unité de pédale selon la revendication 1, dans laquelle
- l'unité d'accouplement à roue libre (54) comprend une première butée (64) sur l'élément de rotor (24) et une seconde butée (58) sur l'élément tournant (26),
- les éléments de butée (58, 64) venant en prise l'un avec l'autre lors d'un actionnement de l'élément de pédale (12), et les éléments de butée (58, 64) sont détachables l'un de l'autre lors d'un rappel de l'élément de pédale (12).

3. Unité de pédale selon la revendication 2, dans laquelle
- un élément de ressort (38) est disposé entre l'élément de rotor (24) et l'élément tournant (26) de telle sorte que les éléments de butée (58, 64) sont pressés l'un contre l'autre.

4. Unité de pédale selon l'une des revendications précédentes dans laquelle
- l'élément de rotor (24) et l'élément tournant (26) sont constitués en forme de disque et reposent l'un sur l'autre,
- les butées (58, 64) étant constituées en tant que bosses ou creux.

5. Unité de pédale selon l'une des revendications précédentes, dans laquelle
- au moins un élément de rappel (34) est couplé à l'élément tournant (26).

6. Unité de pédale selon l'une des revendications précédentes, dans laquelle
- le dispositif d'entraînement (20) est constitué en tant que moteur-couple,
- l'élément de stator (22) présentant un certain nombre de bobines de champ,
- et l'élément de rotor (25) présentant au moins un élément d'aimant (50).

7. Unité de pédale selon l'une des revendications précédentes, dans laquelle
- l'élément de base (14) présente un carter de pédale (18),
- et une unité de commande d'entraînement (40) placée dans celui-ci pour l'activation du dispositif d'entraînement (20),
- ainsi qu'au moins un raccordement à fiches (42, 44) pour la connexion électrique de l'unité de commande et/ou d'une unité de détection,
- un grillage estampé (66) étant moulé au moins en partie dans une paroi du carter de pédale (18) pour la connexion électrique de l'unité de commande d'entraînement et/ou de l'unité de détection au raccordement à fiches (42, 44).

8. Ensemble de pédale comprenant
- une unité de pédale (10) selon l'une des revendications précédentes,
- et une unité de commande de pédale pour la spécification d'une force antagoniste à générer par le dispositif d'entraînement (20).

9. Automobile avec une unité de pédale selon l'une des revendications 1 à 7 ou un ensemble de pédale selon la revendication 8.
